# EUROPÄISCHE PATENTSCHRIFT

(11) **EP 4 467 311 B1**
(45) Veröffentlichungstag und Bekanntmachung des Hinweises auf die Patenterteilung: **01.04.2026**
(21) Anmeldenummer: 24177740.8
(22) Anmeldetag: 23.05.2024
(51) Int. Cl.: B29B 11/16, B29C 70/38

(54) **FASERLEGEANLAGE ZUR HERSTELLUNG EINER FASERPREFORM SOWIE VERFAHREN HIERZU**
FIBRE LAYING SYSTEM FOR PRODUCING A FIBRE PREFORM AND METHOD THEREFOR
INSTALLATION DE POSE DE FIBRES DESTINÉE À LA FABRICATION D'UN PRÉFORME DE FIBRES ET PROCÉDÉ ASSOCIÉ

(30) Priorität: 23.05.2023 DE 102023113431
(43) Veröffentlichungstag der Anmeldung: 27.11.2024
(73) Patentinhaber: Deutsches Zentrum für Luft- und Raumfahrt e.V., 53227 Bonn-Oberkassel (DE)
(72) Erfinder: Grohmann, Yannis, 20249 Hamburg (DE)
(74) Vertreter: Gramm, Lins & Partner Patent- und Rechtsanwälte PartGmbB

(56) Entgegenhaltungen:
- CN-A- 112 895 516
- DE-A1- 102011 102 950
- DE-A1- 102018 116 662
- DE-A1- 102019 109 788
- DE-B4- 102013 107 103
- US-A1- 2017 348 874
- US-A1- 2022 305 716
- US-B2- 7 841 375

## Beschreibung

Die Erfindung betrifft eine Faserlegeanlage zur Herstellung einer Faserpreform aus einem quasiendlosen Fasermaterial eines Faserverbundwerkstoffes. Die Erfindung betrifft ebenso ein Verfahren hierzu.

Aufgrund der gewichtsspezifischen Festigkeit und Steifigkeit von Faserverbundbauteilen, die aus einem Faserverbundwerkstoff hergestellt werden, sind derartige Bauteile aus der Luft- und Raumfahrt sowie aus vielen weiteren Anwendungsgebieten, wie beispielsweise dem Automobilbereich, heutzutage kaum mehr wegzudenken. Denn durch das besonders günstige Verhältnis von Gewicht zu Festigkeit und Steifigkeit eignen sich derartige Faserverbundwerkstoffe insbesondere für den Leichtbau.

Bei der Herstellung eines Faserverbundbauteils wird dabei ein das Fasermaterial einbettendes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, sodass das trockene Fasermaterial mit dem Matrixmaterial getränkt bzw. imprägniert wird. Dies geschieht in der Regel aufgrund einer Druckdifferenz zwischen dem Matrixmaterial und dem Fasermaterial, indem beispielsweise das Fasermaterial mittels einer Vakuumpumpe evakuiert wird. Im Gegensatz hierzu sind auch Faserverbundwerkstoffe bekannt, bei denen das Fasermaterial mit dem Matrixmaterial bereits vorimprägniert ist (sogenannte Prepregs).

Damit das später herzustellende Faserverbundbauteil seine gewünschte Bauteilgeometrie erhält, wird das Fasermaterial (trockenes oder vorimprägniertes Faserhalbzeug) in die gewünschte Bauteilform gebracht werden, bevor das Matrixmaterial vollständig ausgehärtet ist. Hierzu werden insbesondere bei komplexen Bauteilgeometrien zuvor sogenannte Preformen hergestellt, die die spätere Bauteilgeometrie aufweisen oder dieser zumindest sehr ähnlich sind. Nicht selten werden dabei verschiedene Preformen zu einem gesamten Bauteil zusammengesetzt. Eine solche Preform kann dann bspw. in einen Herstellungsaufbau gebracht werden, wo es mit einem Matrixmaterial injiziert und anschließend das Matrixmaterial zusammen mit dem Bauteil ausgehärtet wird.

Um zu verhindern, dass während der Herstellung der Faserpreform sich das Fasermaterial, insbesondere während eines automatisierten Ablegeprozesses bzw. Drapierprozesses, verschiebt, wird das Fasermaterial fixiert, was beispielsweise durch ein Bindermaterial in Form eines Pulvers oder eines Vlies durch Einbringung von Wärmeenergie erfolgen kann. Bei den sogenannten Prepregs kann auch ohne Bindermaterial durch Einbringung von Wärme ein Anheften erreicht werden, da das in den vorimprägnierten Fasern enthaltene Matrixmaterial aufweicht oder aufschmilzt und so aneinander klebt.

Insbesondere bei großen Bauteilen und bei Bauteilen mit einem großen Lagenaufbau ist das Fixieren notwendig, um einzelne Lagen miteinander zu verbinden und die hergestellte Preform, auch Vorformling genannt, ein gewisses Maß an Eigensteifigkeit zu verleihen.

Darüber hinaus hat es sich gezeigt, dass erwärmte oder erhitzte Prepregs verbesserte Verarbeitungseigenschaften haben, so dass sich erwärmte oder erhitzte Prepregs besser in die gewünschte Bauteilform bringen lassen.

Aus der DE 102011 076 463 A1 ist ein Reparaturverfahren für ein Formteil aus einem Kunststoffmaterial bekannt, bei dem ein passives Heizelement in dem Reparaturbereich vorgesehen ist, das berührungslos von außen mit einem magnetischen Wechselfeld beaufschlagt wird.

Aus der DE 103 53 070 A1 ist ein Verfahren und eine Vorrichtung zur Binderaktivierung von Faserhalbzeugen bekannt, bei dem in dem Formwerkzeug zwei Elektroden vorgesehen sind, die mit den insbesondere äußeren Randbereichen der Preform in Berührung stehen. Wird nun eine Spannung an die Elektroden angelegt, so erfolgt ein Stromfluss durch die Preform, was zu einer Erwärmung und somit zu einer Binderaktivierung führt. Nachteilig hierbei ist jedoch, dass die gesamte Preform erwärmt werden soll, was insbesondere bei einer Preform mit großem Lagenaufbau zu hohen Stromflüssen führt. Denn durch die Anordnung der Elektroden im Formwerkzeug erfolgt in der Regel der Stromfluss durch die unteren Faserhalbzeuglagen, so dass eine Binderaktivierung in höheren Faserhalbzeuglagen nur durch eine hohe Wärmeabstrahlung der unteren Lagen und somit durch einen hohen Stromfluss erreicht werden kann.

Aus der DE 10 2011 108 157 A1 ist ein Formwerkzeug zur Herstellung von Faserverbundbauteilen bekannt, bei dem in dem Formwerkzeug eine Mehrzahl von Induktionsvorrichtungen vorgesehen sind, um so in das Formwerkzeug eingebrachte Faserverbundbauteil mittels Induktion zu erwärmen.

Eine ähnliche Vorrichtung ist auch aus der DE 10 2006 040 049 A1 bekannt, bei dem unter einem Vakuumsack die Faserhalbzeuglagen auf dem Formwerkzeug angeordnet sind. Durch eine Druckdifferenz werden die Kohlenstofffasern aneinander angedrückt, wobei mit Hilfe eines magnetischen Wechselfeldes elektrische Ströme in den Kohlenstofffasern zur Binderaktivierung erzeugt werden.

Aus der DE 10 2008 020 564 A1 ist eine Tapelegevorrichtung bekannt, bei der die Anpressrolle so ausgebildet ist, dass mit Hilfe von Infrarotstrahlung oder Induktion die abgelegten Fasertapes mit Wärmeenergie beaufschlagt werden können.

Aus der DE 10 2013 107 102 A1 ist eine Faserhalbzeug-Temperiervorrichtung zum Temperieren von einem aus mehreren Faserhalbzeuglagen gebildeten Faserpreform bekannt, die ein erstes und ein zweites elektrisches Kontaktelement hat. Die beiden Kontaktelemente werden an jeweils gegenüberliegenden Seiten der bereits fertig hergestellten Faserpreform aufgelegt, um so einen Stromfluss in Dickenrichtung durch die Faserpreform zu bewirken.

Aus der DE 10 2013 107 103 A1 ist ein Faserlegekopf zum Legen von Faserhalbzeugen auf ein Formwerkzeug bekannt, wobei der Faserlegekopf eine Elektrode hat, die mit einer Gegenelektrode derart zusammenwirkt, dass beim Anlegen einer elektrischen Spannung an die Elektrode und/oder Gegenelektrode, wenn Elektrode und Gegenelektroden mit dem abzulegenden Fasermaterial kontaktieren, ein Stromfluss bewirkt wird, der zum Temperieren des abzulegenden Fasermaterials dient.

Aus der DE 10 2013 107 105 A1 ist ein Verfahren zum lokalen Temperieren einer bereits hergestellten Faserpreform bekannt, die aus mehreren Faserlagen gebildet ist. Dabei werden eine Elektrode und eine Gegenelektrode an derselben äußeren Seite der Faserpreform elektrisch kontaktiert und mit einer gewissen Anpresskraft in Richtung Faserpreform gedrückt, sodass ein Stromfluss beim Anlegen einer elektrischen Spannung an die Elektrode und/oder Gegenelektrode in einer tieferliegenden Faserlage der Faserpreform bewirkt wird.

Bei Faserlegeanlagen, bei denen das Fasermaterial mit einer Elektrode in Form einer einzelnen Umlenkrolle kontaktiert wird, hat sich die Temperierung mittels Bestromung insoweit als nachteilig herausgestellt, dass sehr hohe Kontaktwiderstände zwischen der Elektrode und dem Fasermaterial existieren. Diese führen zu einer geringeren Energieeffizienz des Prozesses, da die im Kontaktwiderstand umgesetzte Leistung zu einem großen Anteil als Verlustleistung zu betrachten ist. Bei einer vorgegebenen maximalen elektrischen Spannung für die Anlage wird durch hohe Kontaktwiderstände zudem die maximal erreichbare Prozessgeschwindigkeit reduziert, da der Gesamtwiderstand erhöht ist und somit auch bei gleicher elektrischer Spannung weniger Strom in das Fasermaterial eingeleitet wird.

Weiterhin ist es gerade bei thermoplastischen Carbonfaser-Halbzeugen so, dass die Oberfläche der Halbzeuge zu großen Teilen mit einer isolierenden Kunststoffschicht überzogen ist. Hierdurch kann es soweit kommen, dass bewegte Halbzeuge gar nicht mit Strom im Direktkontakt beheizt werden können oder aber die Energie, während der Bewegung des Halbzeuges über die Kontaktelektrode, nur vereinzelt lokal in Bereichen mit geringem Kontaktwiderstand in das Halbzeug stoßartig eingeleitet wird. Dadurch entstehen lokal extreme Hotspots, die das Halbzeug schädigen können.

Es ist daher Aufgabe der vorliegenden Erfindung eine verbesserte Vorrichtung sowie ein verbessertes Verfahren anzugeben, um die aus dem Stand der Technik bekannten Nachteile bei der Temperierung von Faserhalbzeugen mittels Einleitung von Strom zu vermeiden.

Die Aufgabe wird mit der Faserlegeanlage gemäß Anspruch 1 sowie dem Verfahren gemäß Anspruch 9 erfindungsgemäß gelöst. Vorteilhafte Gestaltungen der Erfindung finden sich dann in den entsprechenden Unteransprüchen.

Gemäß Anspruch 1 wird eine Faserlegeanlage zur Herstellung einer Faserpreform aus einem quasiendlosen Fasermaterial eines Faserverbundwerkstoffes beansprucht, wobei der Faserverbundwerkstoff das Fasermaterial und ein Matrixmaterial enthält. Mithilfe der Faserlegeanlage wird dabei das Fasermaterial auf eine formgebende Werkzeugoberfläche abgelegt, um so die Faserpreform aus dem Fasermaterial herzustellen.

Nach dem Herstellen der Faserpreform wird dann zur Herstellung des Faserverbundbauteils aus der Faserpreform das in der Faserpreform befindliche Matrixmaterial konsolidiert bzw. ausgehärtet. Werden trockene Fasermaterialien abgelegt, um die Faserpreform herzustellen, wird anschließend in einem Infusionsprozess das Matrixmaterial in das trockene Fasermaterial der Faserpreform infundiert und ausgehärtet bzw. konsolidiert. Wird hingegen ein vorimprägniertes Fasermaterial abgelegt, um die Faserpreform herzustellen, so kann ein sich anschließender Infusionsprozess nach der Herstellung der Faserpreform unterbleiben und dass in dem vorimprägnierten Fasermaterial eingebettete Matrixmaterial ausgehärtet werden. Gemäß der vorliegenden Erfindung handelt es sich bei dem abzulegenden Fasermaterial um ein elektrisch leitfähiges Fasermaterial, wie beispielsweise ein Fasermaterial mit Carbonfasern bzw. Kohlenstofffasern.

Bei duroplastischen Prepregs wird das Bauteil ausgehärtet. Werden thermoplastische Prepregs verwendet, kann bei entsprechender Prozessführung auf eine nachfolgende Prozessierung verzichtet werden. Das Material ist sozusagen immer ausgehärtet sobald es eine ausreichend niedrige Temperatur erreicht hat und wird während der Ablage über den Schmelzpunkt aufgeheizt.

Gattungsgemäß hat die Faserlegeanlage mindestens einen Faserlegekopf, der zum Ablegen des dem Faserlegekopf kontinuierlich zugeführten Fasermaterials ausgebildet ist, um die Faserpreform herzustellen, eine Faserzuführeinrichtung, die zum kontinuierlichen Zuführen des quasiendlosen Fasermaterial von einer Fasermaterialbereitstellungseinrichtung zu dem Faserlegekopf ausgebildet ist, und eine Temperiereinrichtung, die zum Temperieren des quasiendlosen Fasermaterials während des kontinuierlichen Zuführens und Ablegens ausgebildet ist. Das Fasermaterial, welches dem Faserlegekopf dabei kontinuierlich zugeführt und durch diesen abgelegt wird, wird während des kontinuierlichen Zuführens und Ablegens mithilfe der Temperiereinrichtung temperiert, indem ein Stromfluss in dem sich kontinuierlich bewegenden Fasermaterial bewirkt wird. Dieser Stromfluss führt aufgrund des elektrischen Widerstandes des Fasermaterials zu einer Erwärmung des Fasermaterials, wodurch das Fasermaterial besser abgelegt werden kann, besser verarbeitet werden kann und/oder entsprechend fixiert werden kann.

Die Faserzuführeinrichtung weist zum prozesssicheren Zuführen des Fasermaterials ein oder mehrere Umlenkrollen auf, an denen das Fasermaterial kontaktbehaftet entlanggeführt wird, wobei es dabei durchaus eine Richtung ändern kann. Dabei kann auch vorgesehen sein, dass mindestens eine der Umlenkrollen aktiv angetrieben ist, um dem Fasermaterial hierbei den nötigen Vorschub bereitzustellen. Dabei kann auch vorgesehen sein, dass ein Paar gegenüberliegende Vorschubrollen oder Walzen vorgesehen sind, zwischen denen das Fasermaterial eingeklemmt wird. Durch den aktiven Antrieb dieser Vorschubrollen kann das Fasermaterial auch aus dem Stillstand heraus wieder in Bewegung gesetzt werden.

Erfindungsgemäß ist vorgesehen, dass die Temperiereinrichtung eine Klemmvorrichtung mit zwei gegenüberliegenden Klemmelementen aufweist, zwischen denen das Fasermaterial kontaktbehaftet hindurchführbar ist, wobei an mindestens einem Klemmelement mindestens eine mit einer elektrischen Energiequelle verbundene oder verbindbare Elektrode derart vorgesehen ist, dass die Elektrode das zwischen den Klemmelementen kontaktbehaftet hindurchgeführte Fasermaterial elektrisch kontaktiert, wobei die Elektrode mit mindestens einer mit dem Fasermaterial ebenfalls elektrisch kontaktierten Gegenelektrode derart zusammenwirkt, dass in einem durch die Kontaktierung der mindestens einen Elektrode und Gegenelektrode gebildeten Bestromungsabschnitt ein Stromfluss in dem Fasermaterial bewirkt wird, und wobei mindestens eines der Klemmelemente mit einem Bewegungsmechanismus derart gekoppelt ist, dass der Abstand zwischen den Klemmelementen vergrößerbar und verkleinerbar ist.

Demnach kann mithilfe der Klemmvorrichtung das Fasermaterial zwischen den beiden klemmen Elementen kontaktbehafteten durchgeführt werden, während durch die beiden Klemmelemente eine Klemmkraft auf das Fasermaterial ausgeübt wird. Es hat sich gezeigt, dass trotz der bewirkten Klemmkraft und der damit einhergehenden Erhöhung der Reibung zwischen den Flächen der Klemmelemente und dem Fasermaterial dennoch prozesssicher das Fasermaterial kontinuierlich abgelegt werden kann.

Wenigstens eines der Klemmelemente weist dabei eine Elektrode auf, die so an dem Klemmelement angeordnet ist, dass das Fasermaterial die Elektrode elektrisch kontaktiert, wenn das Fasermaterial kontaktbehaftet zwischen den beiden Klemmelementen unter Aufbringung der Klemmkraft hindurchgeführt wird. Das Fasermaterial kontaktiert dabei des Weiteren eine Gegenelektrode, die beispielsweise in der Anpressrolle oder dem Anpressschuh des Faserlegekopfes oder beispielsweise in dem Formwerkzeug bzw. in der formgebenden Werkzeugoberfläche vorgesehen sein kann.

Zwischen der Elektrode und der Gegenelektrode wird so ein Bestromungsabschnitt gebildet, der sich entlang der Faserrichtung erstreckt. Elektrode und Gegenelektrode sind dabei in Zuführrichtung voneinander beabstandet angeordnet, sodass der Stromfluss in der Ebene des Fasermaterials bewirkt wird. Damit wird eine gewisse Strecke zwischen der Elektrode und der Gegenelektrode in dem Fasermaterial bestromt und somit temperiert.

Es ist des Weiteren erfindungsgemäß vorgesehen, dass mindestens eines der Klemmelemente mit einem Bewegungsmechanismus derart gekoppelt sind, dass der Abstand zwischen den Klemmelementen vergrößert und verkleinert werden kann. Hierdurch kann erreicht werden, dass durch eine Vergrößerung des Abstandes zwischen den Klemmelementen das Fasermaterial nicht mehr kontaktbehaftet an zumindest einem der Klemmelemente geführt wird, wodurch der Reibungswiderstand basierend auf der Klemmkraft bei Verkleinerung des Abstandes weitestgehend aufgehoben wird.

Dies ist besonders dann vorteilhaft, wenn nach dem Neupositionieren des Ablegekopfes an einer neuen Ablegeposition die Zuführung des Fasermaterials im Ablegekopf neu gestartet wird und dabei das Fasermaterial durch die beiden Klemmelemente der Klemmeinrichtung neu eingefädelt werden muss. Durch die Vergrößerung des Abstandes entsteht so genügend Raum für das Fasermaterial, zwischen den Klemmelementen hindurchgeführt zu werden, bis es auf die Ablegeeinheit des Ablegekopfes trifft und somit eine Gegenspannung aufgebaut wird, sodass die Klemmelemente ihren Abstand verringern können und die Klemmkraft aufbringen können, um eine Bestromung des Fasermaterials mit einem möglichst geringen elektrischen Kontaktwiderstand zu erreichen.

Gemäß einer Ausführungsform ist vorgesehen, dass die Faserlegeanlage eine Schneideinrichtung aufweist, die zum Durchtrennen des quasiendlosen Fasermaterials ausgebildet ist, wobei die Klemmvorrichtung der Temperiereinrichtung in Förderrichtung nach der Schneideinrichtung angeordnet ist.

Eine solche Schneideinrichtung kann dabei so ausgebildet sein, dass das quasiendlose Fasermaterial mittels eines scharfen Messers oder mittels Laser oder anderen Mitteln zum Durchtrennen durchtrennt wird.

Nach dem Trennvorgang wird dabei der Rest des sich noch im Faserlegekopf befindlichen Fasermaterials auf das Werkzeug abgelegt bzw. aus dem Faserlegekopf entfernt, sodass der Transportweg von der Schneideinrichtung bis zum Werkzeug ohne Fasermaterial ist. In diesem Fall befindet sich auch zwischen den Klemmelementen der Klemmvorrichtung keine Fasermaterial. Für die Wiederaufnahme der Faserzuführung zum Ablegen des Fasermaterials ist es daher vorteilhaft, wenn der Abstand zwischen den gegenüberliegenden Klemmelementen vergrößert wird, sodass der Anfang des Fasermaterials zwischen den Klemmelementen mit einem großen Spiel hindurchgeführt werden kann, wobei zum Temperieren des Fasermaterials dann der Abstand zwischen den Klemmelementen wieder verkleinert wird, ist das Fasermaterial kontaktbehafteten durchgeführt wird.

Demnach ist gemäß einer Ausführungsform vorgesehen, dass die Faserlegeanlage derart eingerichtet ist, dass zum Durchtrennen des quasiendlosen Fasermaterials das kontinuierliche Zuführen gestoppt und das Fasermaterial mittels der Schneideinrichtung durchtrennt wird, wobei vor der Wiederaufnahme der kontinuierlichen Zuführung mittels des Bewegungsmechanismus der Abstand zwischen den Klemmelementen vergrößert wird und nach der Wiederaufnahme der kontinuierlichen Zuführung, wenn das Fasermaterial zwischen den Klemmelementen geführt wird, mittels des Bewegungsmechanismus der Abstand zwischen den Klemmelementen verkleinert wird, bis das Fasermaterial an zwischen den Klemmelementen kontaktbehaftet geführt wird.

Grundsätzlich können die Klemmelemente der Klemmvorrichtung mithilfe von Aktuatoren, die mithilfe einer Steuereinheit angesteuert werden, bewegt werden, um den Abstand zwischen den gegenüberliegenden Klemmelementen zu vergrößern oder zu verkleinern.

Es ist allerdings auch denkbar, dass die Klemmelemente mithilfe einer Hebelvorrichtung des Bewegungsmechanismus zum Vergrößern oder zum Verkleinern ihres Abstandes zueinander ausgebildet sind. Diese Hebelvorrichtung kann beispielsweise über mindestens eine Umlenkrolle mit dem Fasermaterial derart in Wirkverbindung stehen, dass in Abhängigkeit von einer axialen Zugspannung auf dem Fasermaterial der Abstand zwischen den Klemmelementen eingestellt wird. Liegt beispielsweise keine axiale Zugspannung vor, beispielsweise nach dem Durchtrennen des Fasermaterials, so weisen die Klemmelemente ihren größtmöglichen Abstand zueinander auf. Wird der Ablegeprozess dann wieder aufgenommen, so erhöht sich die axiale Zugspannung des Fasermaterials, wodurch die auf die Umlenkrollen wirkende Kraft über die Hebelvorrichtung den Abstand der Klemmelemente zueinander verringert, bis das Fasermaterial kontaktbehaftet zwischen den Klemmelementen hindurchgeführt wird. Dabei kann in Abhängigkeit der axialen Zugspannung des Fasermaterials auch die Klemmkraft der Klemmelemente eingestellt werden. Je größer die axiale Zugspannung ist, desto größer ist die Klemmkraft der Klemmelemente. In diesem Fall ist die Hebelkraft der Hebelvorrichtung, die als Klemmkraft auf die Klemmelemente wirkt, umso größer, umso größer die axiale Zugspannung des Fasermaterials ist.

Gemäß einer Ausführungsform ist vorgesehen, dass der Faserlegekopf eine Anpressvorrichtung hat, mit der das Fasermaterial auf das Werkzeug zum Ablegen gepresst wird, wobei an der Anpressvorrichtung die mindestens eine Gegenelektrode derart angeordnet ist, dass das Fasermaterial die Gegenelektrode beim Ablegen des Fasermaterials elektrisch kontaktiert.

Eine solche Anpressvorrichtung kann beispielsweise eine Anpressrolle oder ein Anpressschuh sein. Handelt es sich bei der Anpressvorrichtung um eine Anpressrolle, so ist es vorteilhaft, wenn der gesamte Umfang der Anpressrolle durch die Gegenelektrode gebildet wird. So hat das Fasermaterial während des Ablegens dauerhaft Kontakt mit der Gegenelektrode, umso auch dauerhaft einen entsprechenden Stromfluss zu bewirken. Denkbar ist allerdings auch, dass die Gegenelektrode in mehrere Teilelektroden, die voneinander isoliert im Umfang der Anpressrolle vorliegen, unterteilt ist, sodass beim Ablegen des Fasermaterials nicht dauerhaft ein Stromfluss in dem Fasermaterial bewirkt wird.

Gemäß einer Ausführungsform ist vorgesehen, dass in beiden Klemmelementen jeweils mindestens eine Elektrode vorgesehen ist.

Hierdurch wird es möglich, dass die Stromeinleitung in das Fasermaterial von beiden Kontaktseiten der Klemmvorrichtung erfolgt.

Gemäß einer Ausführungsform ist vorgesehen, dass die Klemmelemente jeweils eine flächige Kontaktfläche aufweisen, an denen das Fasermaterial kontaktbehaftet entlanggeführt wird, wobei in die die Kontaktfläche mindestens eines Klemmelementes die wenigstens eine Elektrode vorgesehen ist.

In dieser Ausführungsform sind die Klemmelemente in Art einer Klemmbacke ausgeführt. Das Fasermaterial wird dabei über die (gegenüber dem sich bewegenden Fasermaterial) feststehende flächige Kontaktfläche des jeweiligen Klemmelementes geführt, sodass durch die großflächige Kontaktierung des Fasermaterials mit der Elektrode an den jeweiligen Klemmelementen der Kontaktwiderstand noch einmal deutlich reduziert werden kann. Es hat sich dabei gezeigt, dass das Fasermaterial trotz der reibungsbehafteten Kontaktierung an den Klemmelementen beim kontinuierlichen Ablegen keinen Schaden nimmt. Vielmehr kann prozesssicher ein Stromfluss in den Bestromungsabschnitt ohne erhöhten Kontaktwiderstand eingeleitet werden. Die Klemmelemente sind dabei so ausgebildet, dass das Fasermaterial die feststehende flächige Kontaktfläche kontaktiert, so dass beim Ablegen des Fasermaterials eine Relativbewegung zwischen Fasermaterial und Kontaktfläche entsteht.

Dabei ist es vorteilhaft, wenn die Kontaktfläche des jeweiligen Klemmelementes, sei es die Elektrode oder sei die Elektrode umgebende Flächen, mit einem Material beschichtet ist oder aus einem Material gebildet ist, das einen besonders niedrigen Reibungskoeffizienten aufweist.

Gemäß einer Ausführungsform ist vorgesehen, dass die Temperiereinrichtung in dem Faserlegekopf vorgesehen ist.

Dabei ist es ebenfalls vorteilhaft, wenn in dem Faserlegekopf auch die Schneideinrichtung zum Durchtrennen des Fasermaterials vorgesehen ist, wobei in Förderrichtung nach der Schneideinrichtung in dem Faserlegekopf dann die Klemmvorrichtung der Temperiereinrichtung angeordnet ist.

Gemäß einer Ausführungsform ist vorgesehen, dass die Klemmvorrichtung eine Kühleinrichtung aufweist, um mindestens ein Klemmelement zu kühlen.

Hierdurch können die Klemmelemente gekühlt werden, die sich aufgrund der Reibung und/oder Bestromung des kontaktbehafteten Förderns des Fasermaterials während des Ablegeprozesses erwärmen. Der Beginn und das Ende des Kühlvorgangs kann dabei mithilfe einer Steuereinrichtung gesteuert werden. Denkbar ist aber auch, dass die Kühleinrichtung über die bereits zuvor erwähnte Hebelvorrichtung getriggert wird.

Ist ein Klemmelement auch gleichzeitig eine Elektrode, so heizt diese sich auch über die durch Sie hindurchgeführte elektrische Leistung auf. Ist das Material im Klemmbereich bereits aufgeheizt, so wird auch hierüber Wärme an das Klemmelement abgegeben.

Die Aufgabe wird im Übrigen auch mit dem Verfahren zur Herstellung einer Faserpreform aus einem quasiendlosen Fasermaterial eines Faserverbundwerkstoffes gelöst, wobei der Faserverbundwerkstoff das Fasermaterial und ein das Fasermaterial einbettendes Matrixmaterial enthält, wobei das Fasermaterial mittels einer Faserlegeanlage auf einer Werkzeugoberfläche abgelegt wird, wobei das Verfahren die folgenden Schritte umfasst:
- kontinuierliches Zuführen des quasiendlosen Fasermaterials mittels einer Faserzuführeinrichtung von einer Fasermaterialbereitstellungseinrichtung zu einem Faserlegekopf,
- kontinuierliches Ablegen des kontinuierlich zugeführten Fasermaterials auf der Werkzeugoberfläche, um die Faserpreform herzustellen, und
- Temperieren des quasiendlosen Fasermaterials während des kontinuierlichen Zuführens und Ablegens mittels einer Temperiereinrichtung,
- wobei das Fasermaterial zwischen zwei gegenüberliegenden Klemmelementen einer Klemmvorrichtung der Temperiereinrichtung kontaktbehaftet hindurchgeführt wird,
- wobei das Fasermaterial mindestens eine an einem der Klemmelemente vorgesehene Elektrode elektrisch kontaktiert, wenn das Fasermaterial zwischen den Klemmelementen kontaktbehaftet hindurchgeführt wird, und mindestens eine Gegenelektrode elektrisch kontaktiert,
- wobei mittels einer elektrischen Energiequelle eine elektrische Spannung derart an die Elektrode und/oder Gegenelektrode angelegt wird, dass in einem durch die Kontaktierung der mindestens einen Elektrode und Gegenelektrode gebildeten Bestromungsabschnitt ein Stromfluss in dem Fasermaterial bewirkt wird, und
- wobei der der Abstand zwischen den Klemmelementen mittels einer mit den Klemmelementen gekoppelten Bewegungsmechanismus vergrößert oder verkleinert wird.

Gemäß einer Ausführungsform ist vorgesehen, dass zum Durchtrennen des quasiendlosen Fasermaterials die kontinuierliche Zuführung gestoppt, das Fasermaterial mittels einer Schneideinrichtung durchtrennt und anschließend die kontinuierliche Zuführung wieder aufgenommen wird.

Entscheidend ist, dass das Material durchtrennt wurde. Ein biegeschlaffes Material lässt sich in der Regel nicht durch einen engen Spalt, der reibungsbehaftet ist, fördern - man kann es jedoch reibungsbehaftet durchziehen. Daher funktioniert der Prozess mit dem Klemmspalt solange das Material durch den Spalt gezogen wird. Wurde das Material einmal durchtrennt, muss der Spalt geöffnet werden, um das Material durch den Klemmspalt gefördert zubekommen.

Gemäß einer Ausführungsform ist vorgesehen, dass vor der Wiederaufnahme der kontinuierlichen Zuführung mittels des Bewegungsmechanismus der Abstand zwischen den Klemmelementen vergrößert wird und nach der Wiederaufnahme der kontinuierlichen Zuführung, wenn das Fasermaterial zwischen den Klemmelementen geführt wird, mittels des Bewegungsmechanismus der Abstand zwischen den Klemmelementen verkleinert wird, bis das Fasermaterial an zwischen den Klemmelementen kontaktbehaftet geführt wird.

Gemäß einer Ausführungsform ist vorgesehen, dass das Fasermaterial zwischen den beiden Klemmelementen von beiden Seiten mit jeweils mindestens einer in dem jeweiligen Klemmelement vorgesehenen Elektrode elektrisch kontaktiert wird.

Gemäß einer Ausführungsform ist vorgesehen, dass mindestens ein Klemmelement mittels einer Kühleinrichtung gekühlt wird.

Gemäß einer Ausführungsform ist vorgesehen, dass das mindestens eine Klemmelement erst dann gekühlt wird, wenn der Abstand zwischen den Klemmelementen derart vergrößert wurde, dass das zu kühlende Klemmelement das Fasermaterial nicht kontaktiert.

Die Erfindung wird anhand der beigefügten Figuren beispielhaft näher erläutert. Es zeigen:
- Figur 1: schematische Darstellung einer gattungsgemäßen Faserlegeanlage;
- Figur 2: schematische Darstellung während des Zuführens und Ablegens des Fasermaterials;
- Figur 3: schematische Darstellung beim Durchtrennen des Fasermaterials;
- Figur 4: schematische Darstellung beim Wiederanfahren der Zuführung des Fasermaterials.

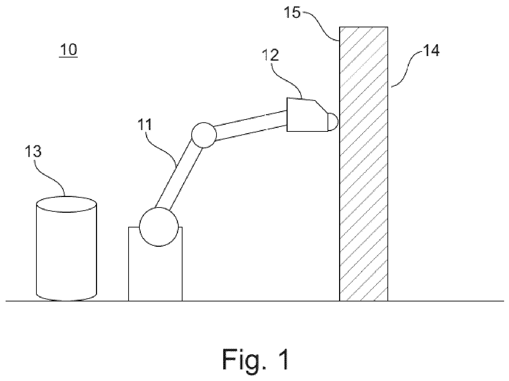

Figur 1 gezeigte einer schematisch stark vereinfachten Darstellung eines Faserlegeanlage 10, die einen Bewegungsautomaten 11 und einen an dem Bewegungsautomaten 11 als Endeffektor angeordneten Faserlegekopf 12 hat. In einer Fasermaterialbereitstellungseinrichtung 13 befindet sich dabei das quasiendlose Fasermaterial, dass mithilfe des Faserlegekopfes 12 auf einem Werkzeug 14 auf dessen formgebende Werkzeugoberfläche 15 abgelegt werden soll. Hierzu wird das quasiendlose Fasermaterial von der Fasermaterialbereitstellungseinrichtung 13 mithilfe einer Faserzuführeinrichtung dem Faserlegekopf 12 zugeführt, sodass der Faserlegekopf 12 dann das Fasermaterial auf die formgebende Werkzeugoberfläche 15 Ablegen kann.

Das quasiendlose Fasermaterial ist dabei insbesondere bandförmig und kann in Form von Rovings oder Tapes bereitgestellt werden. Der Faserlegekopf kann dabei parallel eine Mehrzahl von bandförmigen Fasermaterial ablegen, was unter die Formulierung des Fasermaterials fällt.

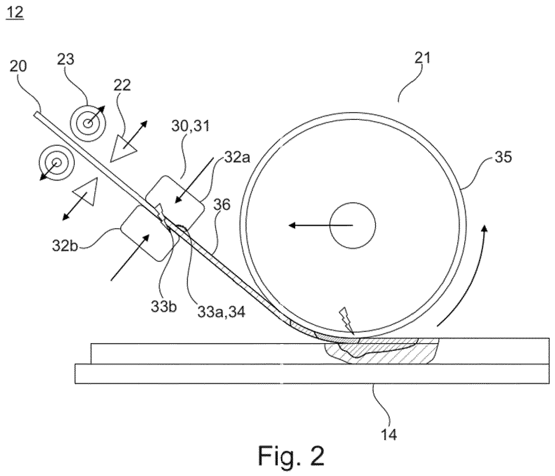

Figur 2 zeigt in einer schematisch stark vereinfachten Darstellung wesentliche Elemente des Faserlegekopfes 12. Zu erkennen ist das quasiendlose Fasermaterial 20, dass einer Anpressrolle 21 des Faserlegekopfes 12 so zugeführt wird, dass die Anpressrolle 21 dass ihr zugeführte Fasermaterialen 20 in das Werkzeug 14 einbringen kann. Im Ausführungsbeispiel der Figur 2 wird dabei das Fasermaterial 20 auf bereits abgelegte Lagen von Fasermaterial aufgebracht.

Der Faserlegekopf 12 weist eine Schneideinrichtung 22 auf, mit der das Fasermaterial 20 durchtrennt werden kann. Dies ist immer dann notwendig, wenn der Faserlegekopf 12 an das Ende der Faserpreform gelangt und anschließend eine neue Ablegeposition einnehmen muss, ohne während des Anfahrens dieser neuen Ablegeposition Fasermaterial abzulegen.

Des Weiteren weist der Faserlegekopf eine Vorschubeinheit 23 auf, mit der das Fasermaterial 20 angetrieben werden kann. Die Rollen der Vorschubeinheit 23 sind dabei aktiv angetrieben und können so das Fasermaterial in Richtung der Anpressrolle 21 befördern.

Im Prozesszustand, wie in Figur 2 gezeigt ist, ist sowohl die Vorschubeinheit 23 als auch die Schneideinrichtung 22 nicht in Betrieb und somit deaktiviert.

Zwischen der Schneideinrichtung 22 und der Anpressrolle 21 befindet sich eine Temperiereinrichtung 30, die eine Klemmvorrichtung 31 hat. Die Klemmvorrichtung 31 besteht dabei aus zwei gegenüberliegenden Klemmelementen 32a, 32b, zwischen denen das Fasermaterial 20 kontaktbehaftet geführt wird, während das Fasermaterial 20 mithilfe der Anpressrolle 21 abgelegt wird.

Die Klemmelemente 32a, 32b weisen jeweils eine Kontaktfläche 33a, 33b auf, an der das Fasermaterial 20 kontaktbehaftet entlanggeführt wird. Während des Ablegens des Fasermaterials 20 entsteht dabei eine Relativbewegung zwischen den Kontaktflächen 33a, 33b und dem Fasermaterial 20, sodass das Fasermaterial 20 über die Kontaktflächen 33a, 33b gezogen wird.

Die Klemmvorrichtung 31 ist dabei des Weiteren so ausgebildet, dass sie während des Ablegens des Fasermaterials 20 eine Klemmkraft mithilfe der Klemmelemente 32a, 32b auf das dazwischen geführte Fasermaterial ausübt, indem die Klemmelemente mit einer gewissen Kraft zueinander gedrückt werden.

Die Kontaktflächen 33a, 33b der Kontaktelemente 32a, 32b sind dabei zumindest teilweise als Elektroden 34 ausgebildet, die mit einer nicht dargestellten elektrischen Spannungsquelle über eine Steuerungseinrichtung in Verbindung stehen, um eine elektrische Spannung an die Elektroden 34 anzulegen, wenn das Fasermaterial auf dem Werkzeug abgelegt wird.

Durch das Aufbringen der Klemmkraft mithilfe der Klemmelemente 32a, 32b wird dabei der Kontaktwiderstand zwischen den Elektroden und dem Fasermaterial 20 verringert, sodass der gesamte Prozess energieeffizienter abläuft.

Die Anpressrolle 21 weist auf ihrer Mantelfläche des Weiteren eine Gegenelektrode 35 auf, die ebenfalls mit der elektrischen Spannungsquelle über die Steuerungseinrichtung in Verbindung steht. Wird eine elektrische Spannung an den Elektroden 34 der Klemmvorrichtung 31 angelegt, so entsteht zwischen den Elektroden 34 und der Gegenelektrode 35 ein Bestromungsabschnitt 36 in dem Fasermaterial 20, innerhalb dessen ein Stromfluss in dem elektrisch leitfähigen Fasermaterial 20 bewirkt wird. Aufgrund des elektrischen Widerstandes des elektrisch leitfähigen Fasermaterials 20 wird das Fasermaterial 20 durch den Stromfluss auf die gewünschte Prozesstemperatur temperiert.

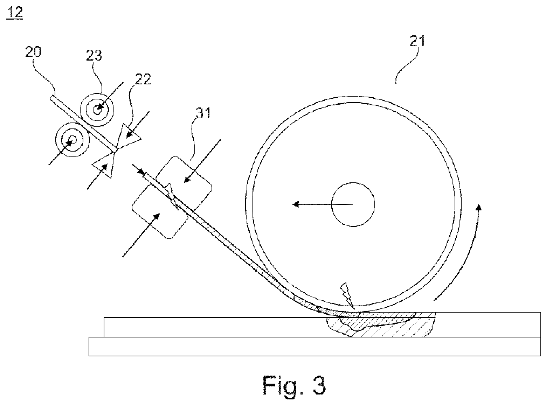

Figur 3 zeigt den Prozessschritt, an dem das Fasermaterial mithilfe der Schneideinrichtung 22 durchtrennt wird. Sowohl die Vorschubeinrichtung 23 als auch die Klemm Einrichtung 31 halten dabei das Fasermaterial unter Zugspannung, sodass mithilfe der Schneideinrichtung 22 das Fasermaterial durchtrennt werden kann. Der von der Schneideinrichtung 22 bis zur Anpressrolle 21 noch verbleibende Rest des Fasermaterials wird noch abgelegt.

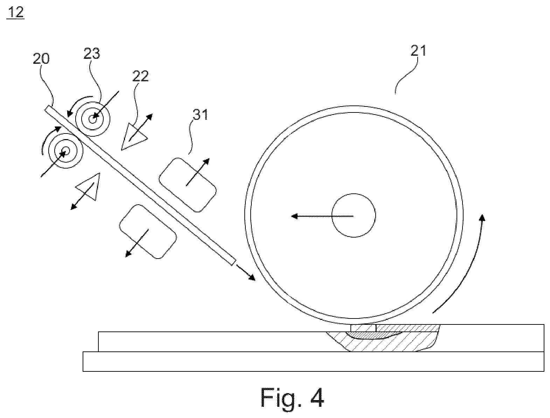

Figur 4 zeigt schließlich den Prozessschritt des Wiederanfahrens nach dem durchtrennen des Fasermaterials in Figur 3. Die Vorschubeinheit 23 wird dabei aktiv angetrieben und fördert das Fasermaterial in Richtung Anpressrolle 21. Die Schneideinrichtung 22 befindet sich wieder in ihrer Ausgangsposition.

Die Klemmelemente 32a, 32b der Klemmvorrichtung 31 sind dabei in eine geöffnete Position verfahren, damit zwischen den Klemmelementen genügend Platz für das Fasermaterial 20 existiert. Wenn das Fasermaterial 20 dann die Anpressrolle 21 erreicht hat und somit genügend Zugspannung auf dem Fasermaterial liegt, so fährt die Vorschubeinheit 23 wieder in ihrer Ausgangsposition zurück und die Klemmelemente der Klemmvorrichtung 31 bewegen sich wieder aufeinander zu verringern ihren Abstand, umso die notwendige Klemmkraft für die Stromeinleitung herzustellen. Ab dann beginnt der Prozess, wie in Figur 1 gezeigt ist, von neuem.

### Bezugszeichenliste

- 10: Faserlegeanlage
- 11: Bewegungsautomat
- 12: Faserlegekopf
- 13: Fasermaterialbereitstellungseinrichtung
- 14: Werkzeug
- 15: Werkzeugoberfläche
- 20: Fasermaterial
- 21: Anpressrolle
- 22: Schneideinrichtung
- 23: Vorschubeinheit
- 30: Temperiereinrichtung
- 31: Klemmvorrichtung
- 32a, 32b: Klemmelemente
- 33a, 33b: Kontaktfläche
- 34: Elektrode
- 35: Gegenelektrode
- 36: Bestromungsabschnitt

## Patentansprüche

1. Faserlegeanlage (10) zur Herstellung einer Faserpreform aus einem quasiendlosen Fasermaterial (20) eines Faserverbundwerkstoffes, welches das Fasermaterial (20) und ein Matrixmaterial enthält, indem das Fasermaterial (20) auf eine Werkzeugoberfläche (15) abgelegt wird, mit
- einem Faserlegekopf (12), der zum Ablegen des dem Faserlegekopf (12) kontinuierlich zugeführten Fasermaterials (20) ausgebildet ist, um die Faserpreform herzustellen,
- einer Faserzuführeinrichtung, die zum kontinuierlichen Zuführen des quasiendlosen Fasermaterial (20) von einer Fasermaterialbereitstellungseinrichtung (13) zu dem Faserlegekopf (12) ausgebildet ist, und
- einer Temperiereinrichtung (30), die zum Temperieren des quasiendlosen Fasermaterials (20) während des kontinuierlichen Zuführens und Ablegens ausgebildet ist,
**dadurch gekennzeichnet, dass**
- die Temperiereinrichtung (30) eine Klemmvorrichtung (31) mit zwei gegenüberliegenden Klemmelementen (32a, 32b) aufweist, zwischen denen das Fasermaterial (20) kontaktbehaftet hindurchführbar ist,
- wobei an mindestens einem Klemmelement (32a, 32b) mindestens eine mit einer elektrischen Energiequelle verbundene oder verbindbare Elektrode (34) derart vorgesehen ist, dass die Elektrode (34) das zwischen den Klemmelementen (32a, 32b) kontaktbehaftet hindurchgeführte Fasermaterial (20) elektrisch kontaktiert,
- wobei die Elektrode (34) mit mindestens einer mit dem Fasermaterial (20) ebenfalls elektrisch kontaktierten Gegenelektrode (35) derart zusammenwirkt, dass in einem durch die Kontaktierung der mindestens einen Elektrode (34) und Gegenelektrode (35) gebildeten Bestromungsabschnitt (36) ein Stromfluss in dem Fasermaterial (20) bewirkt wird, und
- wobei mindestens eines der Klemmelemente (32a, 32b) mit einem Bewegungsmechanismus derart gekoppelt ist, dass der Abstand zwischen den Klemmelementen (32a, 32b) vergrößerbar und verkleinerbar ist.

2. Faserlegeanlage (10) nach Anspruch 1, **dadurch gekennzeichnet, dass** die Faserlegeanlage (10) eine Schneideinrichtung (22) aufweist, die zum Durchtrennen des quasiendlosen Fasermaterials (20) ausgebildet ist, wobei die Klemmvorrichtung (31) der Temperiereinrichtung (30) in Förderrichtung nach der Schneideinrichtung (22) angeordnet ist.

3. Faserlegeanlage (10) nach Anspruch 2, **dadurch gekennzeichnet, dass** die Faserlegeanlage (10) derart eingerichtet ist, dass zum Durchtrennen des quasiendlosen Fasermaterials (20) das kontinuierliche Zuführen gestoppt und das Fasermaterial (20) mittels der Schneideinrichtung (22) durchtrennt wird, wobei vor der Wiederaufnahme der kontinuierlichen Zuführung mittels des Bewegungsmechanismus der Abstand zwischen den Klemmelementen (32a, 32b) vergrößert wird und nach der Wiederaufnahme der kontinuierlichen Zuführung, wenn das Fasermaterial (20) zwischen den Klemmelementen (32a, 32b) geführt wird, mittels des Bewegungsmechanismus der Abstand zwischen den Klemmelementen (32a, 32b) verkleinert wird, bis das Fasermaterial (20) an zwischen den Klemmelementen (32a, 32b) kontaktbehaftet geführt wird.

4. Faserlegeanlage (10) nach einem der vorhergehenden Ansprüche, **dadurch gekennzeichnet, dass** der Faserlegekopf (12) eine Anpressvorrichtung hat, mit der das Fasermaterial (20) auf das Werkzeug (14) zum Ablegen gepresst wird, wobei an der Anpressvorrichtung die mindestens eine Gegenelektrode (35) derart angeordnet ist, dass das Fasermaterial (20) die Gegenelektrode (35) beim Ablegen des Fasermaterials (20) elektrisch kontaktiert.

5. Faserlegeanlage (10) nach einem der vorhergehenden Ansprüche, **dadurch gekennzeichnet, dass** in beiden Klemmelementen (32a, 32b) jeweils mindestens eine Elektrode (34) vorgesehen ist.

6. Faserlegeanlage (10) nach einem der vorhergehenden Ansprüche, **dadurch gekennzeichnet, dass** die Klemmelemente (32a, 32b) jeweils eine flächige Kontaktfläche (33a, 33b) aufweisen, an denen das Fasermaterial (20) kontaktbehaftet entlanggeführt wird, wobei in die Kontaktfläche (33a, 33b) mindestens eines Klemmelementes (32a, 32b) die wenigstens eine Elektrode (34) vorgesehen ist.

7. Faserlegeanlage (10) nach einem der vorhergehenden Ansprüche, **dadurch gekennzeichnet, dass** die Temperiereinrichtung (30) in dem Faserlegekopf (12) vorgesehen ist.

8. Faserlegeanlage (10) nach einem der vorhergehenden Ansprüche, **dadurch gekennzeichnet, dass** die Klemmvorrichtung (31) eine Kühleinrichtung aufweist, um mindestens ein Klemmelement (32a, 32b) zu kühlen.

9. Verfahren zur Herstellung einer Faserpreform aus einem quasiendlosen Fasermaterial (20) eines Faserverbundwerkstoffes, welches das Fasermaterial (20) und ein Matrixmaterial enthält, wobei das Fasermaterial (20) mittels einer Faserlegeanlage (10) auf einer Werkzeugoberfläche (15) abgelegt wird, wobei das Verfahren die folgenden Schritte umfasst:
- kontinuierliches Zuführen des quasiendlosen Fasermaterials (20) mittels einer Faserzuführeinrichtung von einer Fasermaterialbereitstellungseinrichtung (13) zu einem Faserlegekopf (12),
- kontinuierliches Ablegen des kontinuierlich zugeführten Fasermaterials (20) auf der Werkzeugoberfläche (15), um die Faserpreform herzustellen, und
- Temperieren des quasiendlosen Fasermaterials (20) während des kontinuierlichen Zuführens und Ablegens mittels einer Temperiereinrichtung (30),
**dadurch gekennzeichnet, dass**
- das Fasermaterial (20) zwischen zwei gegenüberliegenden Klemmelementen (32a, 32b) einer Klemmvorrichtung (31) der Temperiereinrichtung (30) kontaktbehaftet hindurchgeführt wird,
- wobei das Fasermaterial (20) mindestens eine an einem der Klemmelemente (32a, 32b) vorgesehene Elektrode (34) elektrisch kontaktiert, wenn das Fasermaterial (20) zwischen den Klemmelementen (32a, 32b) kontaktbehaftet hindurchgeführt wird, und mindestens eine Gegenelektrode (35) elektrisch kontaktiert,
- wobei mittels einer elektrischen Energiequelle eine elektrische Spannung derart an die Elektrode (34) und/oder Gegenelektrode (35) angelegt wird, dass in einem durch die Kontaktierung der mindestens einen Elektrode (34) und Gegenelektrode (35) gebildeten Bestromungsabschnitt (36) ein Stromfluss in dem Fasermaterial (20) bewirkt wird, und
- wobei der der Abstand zwischen den Klemmelementen (32a, 32b) mittels einer mit den Klemmelementen (32a, 32b) gekoppelten Bewegungsmechanismus vergrößert oder verkleinert wird.

10. Verfahren nach Anspruch 9, **dadurch gekennzeichnet, dass** zum Durchtrennen des quasiendlosen Fasermaterials (20) die kontinuierliche Zuführung gestoppt, das Fasermaterial (20) mittels einer Schneideinrichtung (22) durchtrennt und anschließend die kontinuierliche Zuführung wieder aufgenommen wird.

11. Verfahren nach Anspruch 10, **dadurch gekennzeichnet, dass** vor der Wiederaufnahme der kontinuierlichen Zuführung mittels des Bewegungsmechanismus der Abstand zwischen den Klemmelementen (32a, 32b) vergrößert wird und nach der Wiederaufnahme der kontinuierlichen Zuführung, wenn das Fasermaterial (20) zwischen den Klemmelementen (32a, 32b) geführt wird, mittels des Bewegungsmechanismus der Abstand zwischen den Klemmelementen (32a, 32b) verkleinert wird, bis das Fasermaterial (20) an zwischen den Klemmelementen (32a, 32b) kontaktbehaftet geführt wird.

12. Verfahren nach einem der Ansprüche 9 bis 11, **dadurch gekennzeichnet, dass** das Fasermaterial (20) zwischen den beiden Klemmelementen (32a, 32b) von beiden Seiten mit jeweils mindestens einer in dem jeweiligen Klemmelement (32a, 32b) vorgesehenen Elektrode (34) elektrisch kontaktiert wird.

13. Verfahren nach einem der Ansprüche 9 bis 12, **dadurch gekennzeichnet, dass** mindestens ein Klemmelement (32a, 32b) mittels einer Kühleinrichtung gekühlt wird.

14. Verfahren nach Anspruch 13, **dadurch gekennzeichnet, dass** das mindestens eine Klemmelement (32a, 32b) erst dann gekühlt wird, wenn der Abstand zwischen den Klemmelementen (32a, 32b) derart vergrößert wurde, dass das zu kühlende Klemmelement (32a, 32b) das Fasermaterial (20) nicht kontaktiert.

## Claims

1. Fiber laying apparatus (10) for producing a fiber preform from a quasi-endless fiber material (20) of a fiber composite material, which contains the fiber material (20) and a matrix material, by depositing the fiber material (20) onto a tool surface (15), comprising
- a fiber laying head (12) configured to lay the fiber material (20) continuously supplied to the fiber laying head (12) to produce the fiber preform,
- a fiber feed device designed to continuously feed the quasi-endless fiber material (20) from a fiber material supply device (13) to the fiber laying head (12), and
- a tempering device (30) designed to temper the quasi-endless fiber material (20) during continuous feeding and depositing,
**characterized in that**
- the tempering device (30) has a clamping device (31) with two opposing clamping elements (32a, 32b) between which the fiber material (20) can be passed in contact,
- wherein at least one electrode (34) connected or connectable to an electrical energy source is provided on at least one clamping element (32a, 32b) in such a way that the electrode (34) makes electrical contact with the fiber material (20) passed in contact between the clamping elements (32a, 32b),
- wherein the electrode (34) interacts with at least one counterelectrode (35) which is also electrically contacted with the fiber material (20) in such a way that a current flow is caused in the fiber material (20) in a current segment (36) formed by the contacting of at least one electrode (34) and counterelectrode (35), and
- wherein at least one of the clamping elements (32a, 32b) is coupled to a movement mechanism in such a way that the distance between the clamping elements (32a, 32b) can be increased and decreased.

2. Fiber laying device (10) according to claim 1, **characterized in that** the fiber laying device (10) has a cutting device (22) which is designed to cut the quasi-endless fiber material (20), wherein the clamping device (31) of the tempering device (30) is arranged in the conveying direction after the cutting device (22).

3. Fiber laying device (10) according to claim 2, **characterized in that** the fiber laying device (10) is designed such that, in order to cut the quasi-endless fiber material (20), the continuous feed is stopped and the fiber material (20) is cut by means of the cutting device (22), whereby, before the continuous feed is resumed, the distance between the clamping elements (32a, 32b) is increased before the continuous feed is resumed by means of the movement mechanism, and after the continuous feed is resumed, when the fiber material (20) is guided between the clamping elements (32a, 32b), the distance between the clamping elements (32a, 32b) is reduced by means of the movement mechanism until the fiber material (20) is guided in contact between the clamping elements (32a, 32b).

4. Fiber laying device (10) according to one of the preceding claims, **characterized in that** the fiber laying head (12) has a pressing device with which the fiber material (20) is pressed onto the tool (14) for laying, wherein the at least one counter electrode (35) is arranged on the pressing device in such a way that the counter electrode (35) makes electrical contact with the fiber material (20) when the fiber material (20) is laid down.

5. Fiber laying system (10) according to one of the preceding claims, **characterized in that** at least one electrode (34) is provided in each of the two clamping elements (32a, 32b).

6. Fiber laying device (10) according to one of the preceding claims, **characterized in that** the clamping elements (32a, 32b) each have a flat contact surface (33a, 33b) along which the fiber material (20) is guided in contact, wherein the at least one electrode (34) is provided in the contact surface (33a, 33b) of at least one clamping element (32a, 32b).

7. Fiber laying device (10) according to one of the preceding claims, **characterized in that** the tempering device (30) is provided in the fiber laying head (12).

8. Fiber laying device (10) according to one of the preceding claims, **characterized in that** the clamping device (31) has a cooling device for cooling at least one clamping element (32a, 32b).

9. Method for producing a fiber preform from a quasi-endless fiber material (20) of a fiber composite material, which contains the fiber material (20) and a matrix material, wherein the fiber material (20) is laid down on a tool surface (15) by means of a fiber laying device (10), wherein the method comprises the following steps:
- continuously feeding the quasi-endless fiber material (20) by means of a fiber feed device from a fiber material supply device (13) to a fiber laying head (12),
- continuous deposition of the continuously fed fiber material (20) on the tool surface (15) to produce the fiber preform, and
- tempering the quasi-endless fiber material (20) during continuous feeding and depositing by means of a tempering device (30),
**characterized in that**
- the fiber material (20) is passed through between two opposing clamping elements (32a, 32b) of a clamping device (31) of the tempering device (30) in contact,
- wherein the fiber material (20) is electrically contacted by at least one electrode (34) provided on one of the clamping elements (32a, 32b) when the fiber material (20) is passed through the clamping elements (32a, 32b) in contact, and at least one counterelectrode (35) is electrically contacted,
- whereby an electrical voltage is applied to the electrode (34) and/or counterelectrode (35) by means of an electrical energy source in such a way that a current flow is caused in the fiber material (20) in a current segment (36) formed by the contact between the at least one electrode (34) and counterelectrode (35), and
- wherein the distance between the clamping elements (32a, 32b) is increased or decreased by means of a movement mechanism coupled to the clamping elements (32a, 32b).

10. Method according to claim 9, **characterized in that**, in order to cut the quasi-endless fiber material (20), the continuous feed is stopped, the fiber material (20) is cut by means of a cutting device (22), and then the continuous feed is resumed.

11. Method according to claim 10, **characterized in that**, before the continuous feed is resumed by means of the movement mechanism, the distance between the clamping elements (32a, 32b) is increased and, after the continuous feed is resumed, when the fiber material (20) is guided between the clamping elements (32a, 32b), the distance between the clamping elements (32a, 32b) is reduced by means of the movement mechanism until the fiber material (20) is guided in contact between the clamping elements (32a, 32b).

12. Method according to one of claims 9 to 11, **characterized in that** the fiber material (20) is electrically contacted between the two clamping elements (32a, 32b) from both sides by at least one electrode (34) provided in each respective clamping element (32a, 32b).

13. Method according to one of claims 9 to 12, **characterized in that** at least one clamping element (32a, 32b) is cooled by means of a cooling device.

14. Method according to claim 13, **characterized in that** the at least one clamping element (32a, 32b) is only cooled when the distance between the clamping elements (32a, 32b) has been increased in such a way that the clamping element (32a, 32b) to be cooled does not contact the fiber material (20).

## Revendications

1. Installation de pose de fibres (10) pour fabriquer une préforme de fibres à partir d'un matériau fibreux quasi sans fin (20) d'un matériau composite à fibres qui contient le matériau fibreux (20) et un matériau matriciel, en déposant le matériau fibreux (20) sur une surface d'outil (15), comprenant
- une tête de pose de fibres (12) conçue pour déposer le matériau fibreux (20), amené en continu vers la tête de pose de fibres (12), afin de fabriquer la préforme de fibres,
- un dispositif d'alimentation en fibres conçu pour amener en continu le matériau fibreux quasi sans fin (20) depuis un dispositif d'approvisionnement en matériau fibreux (13) vers la tête de pose de fibres (12), et
- un dispositif de régulation de température (30) conçu pour réguler la température du matériau fibreux quasi sans fin (20) pendant d'alimentation continue et la dépose,
**caractérisée en ce que**
- le dispositif de régulation de température (30) comporte un dispositif de serrage (31) ayant deux éléments de serrage opposés (32a, 32b) entre lesquels le matériau fibreux (20) peut passer avec contact,
- au moins une électrode (34), reliée ou pouvant être reliée à une source d'énergie électrique, est prévue sur au moins un élément de serrage (32a, 32b), de telle sorte que l'électrode (34) entre en contact électrique avec le matériau fibreux (20) passant avec contact entre les éléments de serrage (32a, 32b),
- l'électrode (34) coopère avec au moins une contre-électrode (35) qui est également en contact électrique avec le matériau fibreux (20), de telle sorte qu'un courant électrique circule dans le matériau fibreux (20) dans une section d'alimentation en courant (36) formée par la mise en contact de ladite au moins une électrode (34) et de la contre-électrode (35), et
- l'un au moins des éléments de serrage (32a, 32b) est couplé à un mécanisme de déplacement de telle sorte que la distance entre les éléments de serrage (32a, 32b) puisse être augmentée et réduite.

2. Installation de pose de fibres (10) selon la revendication 1,
**caractérisée en ce que** l'installation de pose de fibres (10) comporte un dispositif de coupe (22) conçu pour sectionner le matériau fibreux quasi sans fin (20), le dispositif de serrage (31) du dispositif de régulation de température (30) étant disposé en aval du dispositif de coupe (22) dans le sens de transport.

3. Installation de pose de fibres (10) selon la revendication 2,
**caractérisée en ce que** l'installation de pose de fibres (10) est conçue de telle sorte que, pour sectionner le matériau fibreux quasi sans fin (20), l'alimentation continue est arrêtée et le matériau fibreux (20) est sectionné au moyen du dispositif de coupe (22), sachant que, avant la reprise de l'alimentation continue, la distance entre les éléments de serrage (32a, 32b) est augmentée au moyen du mécanisme de déplacement, et, après la reprise de l'alimentation continue, lorsque le matériau fibreux (20) passe entre les éléments de serrage (32a, 32b), la distance entre les éléments de serrage (32a, 32b) est réduite au moyen du mécanisme de déplacement jusqu'à ce que le matériau fibreux (20) passe avec contact entre les éléments de serrage (32a, 32b).

4. Installation de pose de fibres (10) selon l'une des revendications précédentes,
**caractérisée en ce que** la tête de pose de fibres (12) comporte un dispositif de pression par lequel le matériau fibreux (20) est pressé sur l'outil (14) pour être déposé, ladite au moins une contre-électrode (35) étant disposée sur le dispositif de pression de telle sorte que le matériau fibreux (20) entre en contact électrique avec la contre-électrode (35) lors de la dépose du matériau fibreux (20).

5. Installation de pose de fibres (10) selon l'une des revendications précédentes,
**caractérisée en ce qu'**au moins une électrode (34) respective est prévue dans chacun des deux éléments de serrage (32a, 32b).

6. Installation de pose de fibres (10) selon l'une des revendications précédentes,
**caractérisée en ce que** les éléments de serrage (32a, 32b) présentent chacun une surface de contact plane (33a, 33b) le long de laquelle le matériau fibreux (20) passe avec contact, ladite au moins une électrode (34) étant prévue dans la surface de contact (33a, 33b) d'au moins un élément de serrage (32a, 32b).

7. Installation de pose de fibres (10) selon l'une des revendications précédentes,
**caractérisée en ce que** le dispositif de régulation de température (30) est prévu dans la tête de pose de fibres (12).

8. Installation de pose de fibres (10) selon l'une des revendications précédentes,
**caractérisée en ce que** le dispositif de serrage (31) comporte un dispositif de refroidissement pour refroidir au moins un élément de serrage (32a, 32b).

9. Procédé de fabrication d'une préforme de fibres à partir d'un matériau fibreux quasi sans fin (20) d'un matériau composite à fibres qui contient le matériau fibreux (20) et un matériau matriciel, le matériau fibreux (20) étant déposé sur une surface d'outil (15) au moyen d'une installation de pose de fibres (10), le procédé comprenant les étapes suivantes consistant à :
- amener en continu le matériau fibreux quasi sans fin (20) depuis un dispositif d'approvisionnement en matériau fibreux (13) vers une tête de pose de fibres (12) au moyen d'un dispositif d'alimentation en fibres,
- déposer en continu le matériau fibreux (20), amené en continu, sur la surface d'outil (15) afin de fabriquer la préforme de fibres, et
- réguler la température du matériau fibreux quasi sans fin (20) pendant l'alimentation et la dépose continues à l'aide d'un dispositif de régulation de température (30),
**caractérisé en ce que**
- le matériau fibreux (20) passe avec contact entre deux éléments de serrage opposés (32a, 32b) d'un dispositif de serrage (31) du dispositif de régulation de température (30),
- le matériau fibreux (20) entre en contact électrique avec au moins une électrode (34), prévue sur l'un des éléments de serrage (32a, 32b), lorsque le matériau fibreux (20) passe avec contact entre les éléments de serrage (32a, 32b), et entre en contact électrique avec au moins une contre-électrode (35),
- une tension électrique est appliquée à l'électrode (34) et/ou à la contre-électrode (35) au moyen d'une source d'énergie électrique de telle sorte qu'un courant électrique circule dans le matériau fibreux (20) dans une section d'alimentation en courant (36) formée par la mise en contact de ladite au moins une électrode (34) et de la contre-électrode (35), et
- la distance entre les éléments de serrage (32a, 32b) est augmentée ou réduite au moyen d'un mécanisme de déplacement couplé aux éléments de serrage (32a, 32b).

10. Procédé selon la revendication 9,
**caractérisé en ce que**, pour sectionner le matériau fibreux quasi sans fin (20), l'alimentation continue est arrêtée, le matériau fibreux (20) est sectionné à l'aide d'un dispositif de coupe (22), puis l'alimentation continue est reprise.

11. Procédé selon la revendication 10,
**caractérisé en ce que**, avant la reprise de l'alimentation continue, la distance entre les éléments de serrage (32a, 32b) est augmentée au moyen du mécanisme de déplacement, et, après la reprise de l'alimentation continue, lorsque le matériau fibreux (20) passe entre les éléments de serrage (32a, 32b), la distance entre les éléments de serrage (32a, 32b) est réduite au moyen du mécanisme de déplacement jusqu'à ce que le matériau fibreux (20) passe avec contact entre les éléments de serrage (32a, 32b).

12. Procédé selon l'une des revendications 9 à 11,
**caractérisé en ce que** le matériau fibreux (20) situé entre les deux éléments de serrage (32a, 32b) est mis en contact électrique, des deux côtés, avec au moins une électrode respective (34) prévue dans l'élément de serrage respectif (32a, 32b).

13. Procédé selon l'une des revendications 9 à 12,
**caractérisé en ce qu'**au moins un élément de serrage (32a, 32b) est refroidi au moyen d'un dispositif de refroidissement.

14. Procédé selon la revendication 13,
**caractérisé en ce que** ledit au moins un élément de serrage (32a, 32b) n'est refroidi que lorsque la distance entre les éléments de serrage (32a, 32b) a été augmentée de telle sorte que l'élément de serrage (32a, 32b) à refroidir n'entre pas en contact avec le matériau fibreux (20).
